# FASCICULE DE BREVET EUROPEEN

(11) **EP 1 548 340 B1**
(45) Date de publication et mention de la délivrance du brevet: **18.10.2006**
(21) Numéro de dépôt: 03079185.9
(22) Date de dépôt: 24.12.2003
(51) Int. Cl.: F16K 17/30, F16K 37/00

(54) **Robinet avec indicateur de position**
Armatur mit Positionsanzeigevorrichtung
Valve with position indicator

(43) Date de publication de la demande: 29.06.2005
(73) Titulaire: LUXEMBOURG PATENT COMPANY S.A., 7505 Lintgen (LU)
(72) Inventeur: Kremer, Paul, 7263 Walferdange (LU); Schmit, Jacques, 9365 Eppeldorf (LU)
(74) Mandataire: Weydert, Robert

(56) Documents cités:
- WO-A-03/044402
- DE-A- 4 114 864
- DE-C- 3 935 584

## Description

L'invention se rapporte à un robinet, notamment pour bouteille de gaz ou de gaz liquéfié, comportant un corps de robinet formant partie d'une structure fixe du robinet, un volant rotatif par rapport à la structure fixe du robinet et autour d'un axe de rotation pour ouvrir ou fermer le robinet, et un moyen pour indiquer la position ouverte ou fermée du robinet, ce moyen d'indication comportant une jupe mobile pour cacher ou exposer un moyen de signalisation afin d'indiquer par la visibilité ou l'invisibilité de ce moyen de signalisation l'état d'ouverture ou de fermeture du robinet, cette jupe étant couplée, de l'un côté, au volant et, couplée de l'autre côté, à un élément de la structure fixe du robinet en vue de causer, sous l'effet du mouvement de rotation du volant dans l'un ou l'autre sens, un déplacement axial de ladite jupe le long de l'axe de rotation par rapport au volant et à la structure fixe du robinet en vue de cacher ou d'exposer le moyen de signalisation.

Des robinets pourvus d'un moyen ou d'un dispositif permettant de voir l'état fermé ou ouvert du robinet à l'extérieur de celui-ci sont connus dans la technique antérieure, voir par exemple DE 41 14 864 A selon lequel un robinet avec moyen d'indication est déjà connu, qui comporte un manchon avec une échelle graduée normalement retiré dans le volant et qui sort du volant lorsque le volant est tourné pour ouvrir le robinet. Le manchon est vissé dans le volant et il est retenu contre rotation par une extrémité hexagonale d'un écrou d'étoupe. Ce moyen d'indication est conçu pour application à un robinet dont la tige n'effectue pas un mouvement axial pour l'ouverture ou la fermeture du robinet. Selon un autre robinet connu une bague fixe est montée sur le corps du robinet. Cette bague est normalement cachée par le volant du robinet et elle a une autre couleur que le corps du robinet et le volant. Ce simple système fonctionne seulement avec un robinet à tige de montée et descente parce que la bague précitée peut être découverte ou rendue visible seulement par le volant du robinet s'il s'éloigne du corps du robinet en cas d'ouverture du robinet. En outre, pour un robinet à très faible mouvement d'ouverture, l'éloignement du volant est limité et la bague indiquant la position ouverte du robinet est à peine ou difficilement visible.

On connaît aussi des robinets avec des volants pourvus de fenêtres par lesquelles l'on peut voir des repères sur le corps du robinet indiquant la position ouverte ou fermée du robinet. Cependant ces dispositifs sont limités à des robinets dont le volant n'effectue qu'une fraction d'un tour de révolution pour l'ouverture ou la fermeture du robinet.

Finalement, des robinets sont connus ayant d'autres dispositifs assez complexes et encombrants pour indiquer la condition ouverte ou fermée du robinet.

La présente invention a pour objet de remédier à ces désavantages et de fournir un robinet avec un simple moyen ou dispositif pour indiquer la condition ouverte ou fermée du robinet, qui est bien visible à l'extérieur du robinet, et qui s'apprête pour un robinet à tige de montée et descente, un robinet à tige rotative (sans montée et descente) et aussi pour un robinet à ouvrir par une fraction d'un tour de révolution ou plusieurs tours de révolution du volant.

Selon l'invention le robinet du type précité est caractérisé en ce que ladite jupe est couplée au volant en vue d'être entraînée en rotation par celui-ci par rapport à la structure fixe du robinet, et la jupe étant couplée audit élément de ladite structure fixe du robinet par un moyen causant, sous l'effet du mouvement de rotation de la jupe, ledit déplacement axial de la jupe.

La jupe mobile du moyen pour indiquer la position ouverte ou fermée du robinet effectue un mouvement ascendant ou descendant en réponse au mouvement de rotation du volant du robinet en vue de découvrir ou de couvrir le moyen de signalisation même si le volant ou la tige du robinet ne monte et ne descend pas. Le couplage entre la jupe mobile et l'élément fixe du robinet peut être conçu par sélection d'un angle d'inclinaison ou d'hélice approprié du moyen d'engagement entre ces deux pièces afin de produire un mouvement axial suffisant de la jupe mobile pour découvrir ou exposer une large surface de signalisation à hauteur ou largeur substantielle pour être facilement visible à l'extérieur du robinet. Pareillement, pour des robinets ayant une tige sans mouvement axial ou à faible mouvement axial et aussi pour des robinets dont le volant n'effectue qu'une fraction d'un tour de révolution pour ouvrir ou fermer le robinet, une large surface de signalisation à hauteur substantielle peut aussi être exposée.

Selon un mode d'exécution préféré de l'invention le dispositif ou le moyen d'indication de l'état d'ouverture ou de fermeture du robinet comporte une pièce de support annulaire séparée du corps du robinet et montée normalement immobile par rapport à celui-ci, et la jupe mobile entoure la pièce de support annulaire et elle est pourvue d'un filetage interne à un ou plusieurs pas de vis engagé avec une partie filetée externe correspondante de la pièce de support. Dans ce mode d'exécution le moyen de signalisation est prévu sur la pièce de support annulaire et ce moyen de signalisation se trouve sur une partie inférieure de la pièce de support rendue visible par le mouvement axial de la jupe lorsque le volant du robinet est tourné dans la direction d'ouverture du robinet. Au moins la partie inférieure de la pièce de support annulaire pourvue du moyen de signalisation (ou formant moyen de signalisation) ou la totalité de cette pièce peut se distinguer des surfaces avoisinantes du robinet par au moins une des conditions comportant une finition de surface différente, une couleur différente et un matériau différent.

La pièce de support annulaire est solidarisée au corps du robinet par friction au moyen d'un engagement pressé et elle est en outre pourvue d'une ouverture centrale de forme polygonale ou en étoile, par exemple à 24 angles ou facettes disposées en zigzag ou en accordéon, engagée sur une extrémité de forme polygonale, par exemple carrée ou hexagonale, d'une bague d'étoupe. La pièce de support annulaire comporte en outre une ou plusieurs amorces de rupture permettant d'ouvrir ou de fermer le robinet en cas de blocage de la jupe sur la pièce de support annulaire, par l'application d'une force suffisante au volant causant la rupture des amorces de rupture. En outre, l'ampleur de l'engagement pressé de la pièce de support annulaire sur le corps du robinet et la forme polygonale de l'ouverture de cette pièce de support sont choisis de sorte que la pièce de support puisse être tournée par rapport au corps de robinet et la bague d'étoupe si la pièce de support est fabriquée d'un matériau tenace empêchant la rupture des amorces de rupture.

Pour coupler la jupe mobile au volant en vue d'être tournée avec celui-ci elle est pourvue à son extrémité supérieure d'un rebord pourvu de plusieurs parties saillantes écartées l'une de l'autre en direction circonférentielle et reçues dans des creux de forme correspondante pratiqués à l'intérieur d'une cavité du volant. L'extrémité inférieure de la jupe est visible en bas du volant au moins dans sa position cachant le moyen d'indication.

De préférence, dans la position fermée du robinet la jupe mobile occupe une position inférieure cachant l'extrémité inférieure de la pièce de support annulaire ou le moyen de signalisation prévu à, ou à proximité de son extrémité inférieure, et par le mouvement de rotation du volant en direction d'ouverture du robinet la jupe mobile est causée de se déplacer axialement vers le haut en vue de découvrir la partie d'extrémité inférieure de la pièce de support annulaire ou son moyen de signalisation de la position du robinet en vue d'être facilement visible, même à distance, à l'extérieur du robinet pour signaliser la position ouverte du robinet.

L'invention sera maintenant expliquée en plus grand détail en référence aux dessins annexés sur lesquels :
la figure 1 est une vue en coupe verticale d'un robinet à tige rotative (sans montée et descente) avec un dispositif selon l'invention pour indiquer la condition ouverte ou fermée du robinet ;
les figures 2A et 2B représentent un robinet à tige de montée et descente avec le dispositif selon l'invention pour indiquer la position ouverte (figure 2A) ou fermée (figure 2B) du robinet ;
les figures 3A, 3B et 3C représentent la jupe mobile et la pièce de support annulaire constituant le dispositif d'indication de la condition fermée et ouverte du robinet ; la figure 3A montrant la position des éléments du dispositif d'indication dans la condition fermée du robinet, la figure 3B montrant la position des éléments du dispositif dans la condition ouverte du robinet, et la figure 3C montrant la position des éléments du dispositif en perspective dans la condition ouverte du robinet ;
les figures 4A et 4B montrent la jupe mobile du dispositif d'indication en coupe verticale (figure 4A) selon la ligne A-A de la figure 4B respectivement en vue de dessous (figure 4B) ; et
les figures 5A et 5B représentent la pièce de support annulaire du dispositif d'indication de la condition ouverte ou fermée du robinet, la figure 5A étant une représentation en coupe verticale le long de la ligne B-B de la figure 5B et la figure 5B est une vue de dessus de la figure 5A.

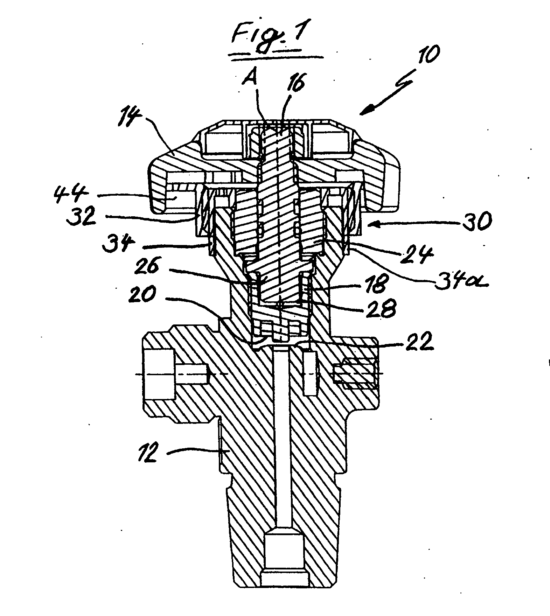

Le robinet selon l'invention sera maintenant décrit en plus grand détail. Comme représenté sur la figure 1, le robinet 10 comporte un corps de robinet 12, un volant 14 couplé à une tige 16 qui à son tour est couplée à un siège mobile 18 portant une bague d'étanchéité 20 engageant un siège fixe 22 du corps de robinet dans la position fermée du robinet. La tige 16 est logée pour rotation dans une bague d'étoupe 24 vissée dans une partie filetée à l'extrémité supérieure du corps du robinet 12. La tige 16 est pourvue à son extrémité inférieure d'une partie carrée 26 engagée dans une cavité de forme carrée 28 du siège mobile 18. le siège mobile 18 est vissé dans une partie filetée à l'intérieur du corps du robinet 12. Le robinet 10 est donc un type de robinet à tige rotative, c'est-à-dire la tige ne se déplace pas verticalement ou axialement en vue d'ouvrir ou de fermer le robinet. Seulement le siège mobile 18 se déplace verticalement ou axialement lorsque la tige 16 est tournée dans la direction d'ouverture ou de fermeture du robinet.

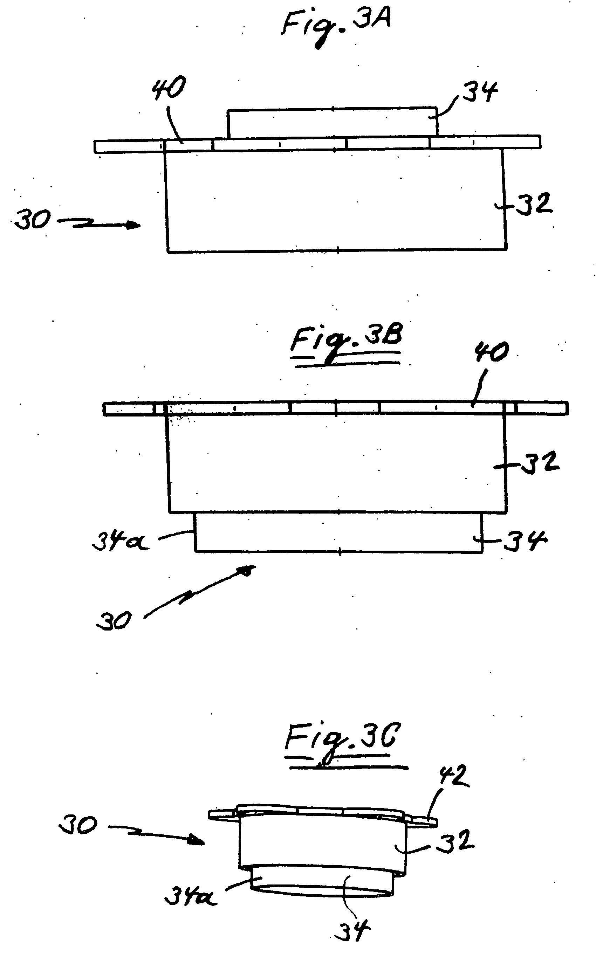

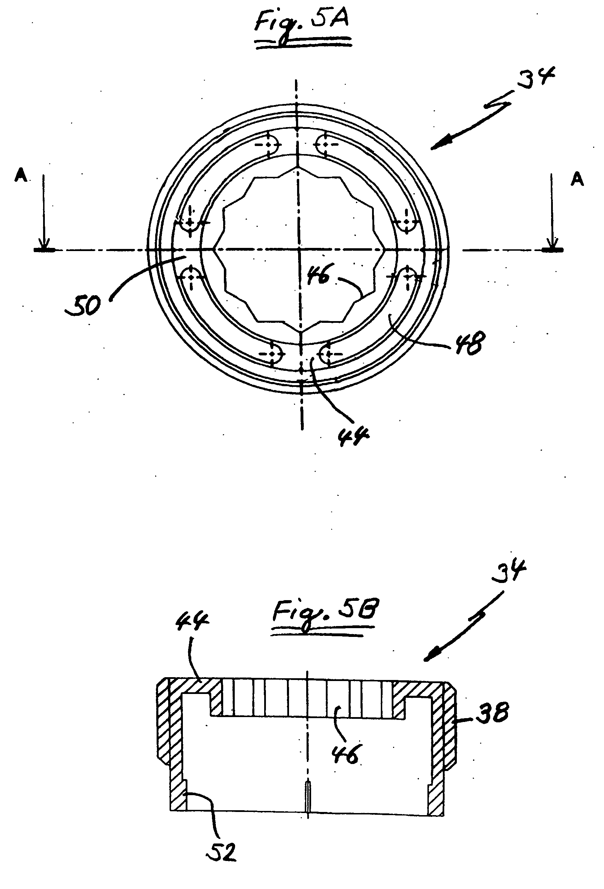

Se rapportant encore à la figure 1, le mécanisme d'indication de la position ouverte ou fermée du robinet 10, désigné en son ensemble par 30 comporte une jupe mobile externe cylindrique 32 et une pièce de support annulaire interne cylindrique 34. La jupe mobile 32 est couplée au volant 14 en vue d'être entraînée en rotation par le volant 14 tout en permettant un mouvement axial de la jupe 32 le long de l'axe longitudinal A du robinet 10 par rapport à la pièce de support annulaire 34 et au volant 14 et aussi par rapport au corps de robinet 12. La jupe 32 entoure la pièce de support annulaire 34 et la partie supérieure de la jupe 32 est reçue à l'intérieur du volant 14 alors que sa partie inférieure est visible et se trouve à l'extérieur du volant en bas de celui-ci. La pièce de support 34 est montée immobile par friction par un engagement pressé sur le corps de robinet 12 pour qu'elle ne puisse pas se déplacer ou tourner par rapport à celui-ci en fonctionnement normal du robinet. La pièce de support annulaire 34 est aussi prolongée vers le bas au-delà de l'extrémité inférieure du volant 14. La jupe 32 est pourvue d'un filetage interne 36, voir figure 3A, et ce filetage 36 est en engagement avec une partie filetée externe 38 de la pièce de support interne 34, voir figure 5A.

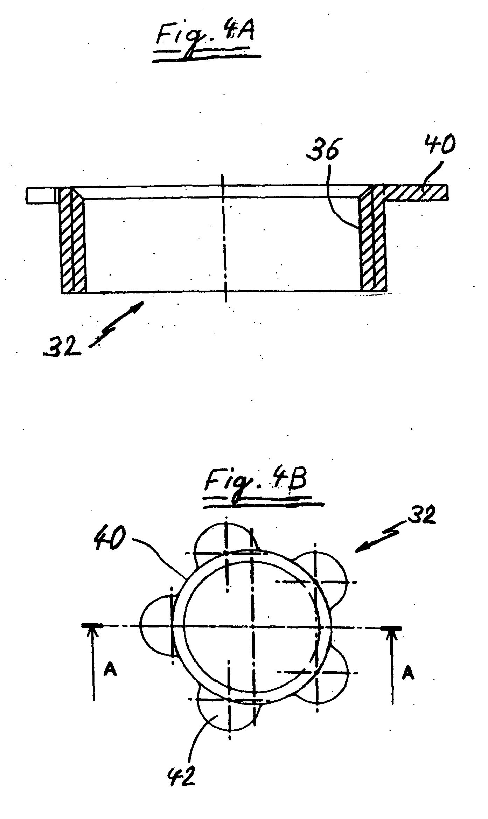

Comme représenté le mieux sur la figure 4B la jupe mobile 32 est pourvue à l'une de ses extrémités d'un rebord 40 pourvu de plusieurs parties saillantes, ou lobes, 42 de forme généralement semi-circulaire s'étendant vers l'extérieur et espacées l'une de l'autre en direction circonférentielle de la jupe 32. Ces parties saillantes 42 sont reçues dans des creux, par exemple 44, de forme correspondante, voir figure 1, pratiqués dans la surface périphérique interne d'une cavité ouverte vers le bas formée dans le volant 14. La jupe 32 est donc couplée au volant 14 pour rotation avec celui-ci mais ne peut pas se déplacer dans le sens rotatif par rapport au volant 14. Pendant le mouvement de rotation du volant 14 et de la jupe 32 autour de la pièce de support annulaire 34 et du corps de robinet 12 les parties saillantes 42 de la jupe 32 se déplacent verticalement dans les creux 44 du volant 14. N'importe quel autre moyen peut être prévu pour coupler la jupe mobile 32 au volant 14, par exemple, des goujons axiaux (non-représentés) fixés au volant 14 et reçus dans des trous axiaux (non-représentés) pratiqués dans la jupe mobile 32.

Les figures 5A et 5B représentent la pièce de support annulaire interne 34 qui est normalement immobile ou fixe par rapport au corps de robinet 12. La pièce de support annulaire 34 est pourvue à son extrémité supérieure d'une paroi radiale annulaire 44 pourvue en son centre d'une ouverture polygonale 46, de préférence une ouverture en étoile à 24 facettes disposées en zigzag ou en accordéon, ou à 24 angles s'ouvrant alternativement vers l'intérieur et vers l'extérieur. En outre la paroi annulaire radiale 44 est pourvue de plusieurs trous courbes allongés 48 espacés en direction circonférentielle l'un de l'autre en laissant des amorces de rupture 50 entre les trous adjacents. L'élément de support annulaire 34 est pourvu en bas de sa surface cylindrique interne de plusieurs nervures verticales 52 qui engagent la surface externe du corps de robinet 12 à friction lorsque la pièce de support annulaire 34 est pressée sur le corps de robinet 12. Si la pièce de support annulaire 34 est montée sur le corps de robinet 12, l'ouverture polygonale 46 est reçu autour de l'extrémité polygonale, carrée ou hexagonale, de la bague d'étoupe 24, comme représenté en figure 1.

Les figures 3A, 3B et 3C montrent les éléments annulaires ou bagues 32, 34 interne et externe (c'est-à-dire la jupe 32 et la pièce de support 34) assemblés du dispositif d'indication. Dans la position de la figure 3A la jupe 32 cache ou recouvre l'extrémité inférieure de la pièce de support 34. Dans cette position des deux éléments 32 et 34 le robinet est en position fermée. Sur les figures 3B et 3C la jupe mobile 32 est déplacée vers le haut et la partie inférieure 34a de la pièce de support interne 34 est visible en bas de l'extrémité inférieure de la jupe externe 32. Cette position est aussi représentée sur la figure 1 et montre la condition ouverte du robinet 10. La partie inférieure 34A de la pièce de support 34 sert donc de surface de signalisation ou de partie d'indication de la position du robinet et indique la position ouverte du robinet lorsqu'elle est visible en-dessous de la jupe mobile 32. De préférence, les deux éléments 32 et 34 sont fabriqués en matière plastique et au moins la partie inférieure de la pièce de support 34 a une autre couleur que la jupe mobile 32, par exemple une couleur rouge. Il est aussi possible de fabriquer les deux éléments 32 et 34 de matériaux différents et/ou de prévoir par exemple un aspect brillant ou une autre finition de surface pour l'extrémité inférieure 34a de la pièce de support 34, en particulier si les deux éléments 32 et 34 sont métalliques.

L'on comprendra que lors de la rotation du volant 14 la jupe mobile 32 tourne aussi avec le volant 14 et à cause de l'engagement fileté entre les éléments 32 et 34, l'élément externe ou la jupe 32 se déplace verticalement alors que l'élément interne 34 reste stationnaire. L'angle d'hélice du filetage entre les deux éléments 32 et 34 est choisi assez élevé de façon à découvrir une partie substantielle de la pièce de support 34 à son extrémité inférieure 34a. Un mouvement axial du volant 14 n'est pas nécessaire pour exposer la partie inférieure 34a de la pièce de support 34. Si le déplacement axial du volant est faible ou si son mouvement de rotation n'est qu'une fraction d'un tour de révolution, l'angle d'hélice des parties filetées 36 et 38 est choisi assez élevé pour assurer l'exposition d'une partie substantielle à l'extrémité inférieure de la pièce de support 34. L'on peut aussi prévoir des filetages à pas ou à spires multiples.

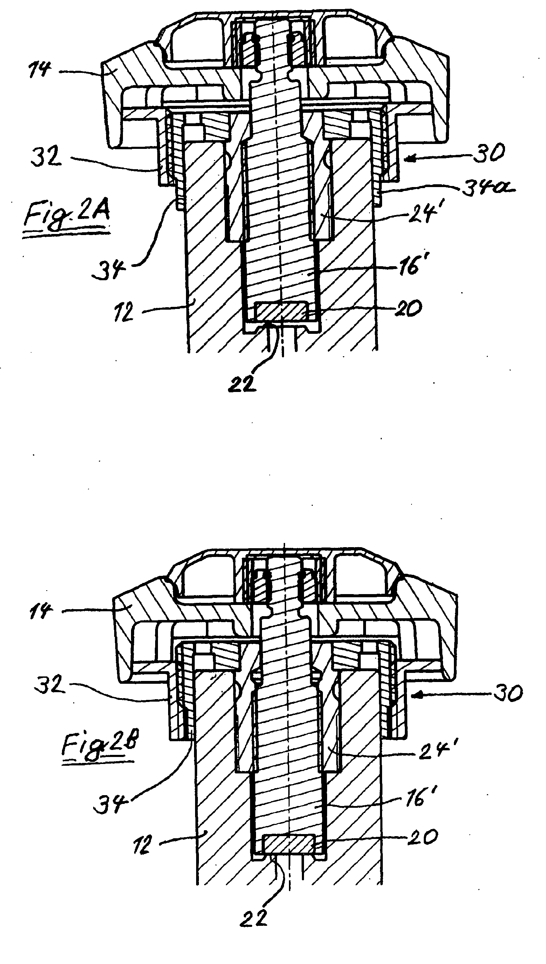

Comme cité déjà ci-avant le dispositif d'indication selon l'invention peut aussi être utilisé en combinaison avec un robinet à tige ascendante et descendante, c'est-à-dire un robinet pourvu d'un volant qui se déplace axialement par rapport au corps du robinet lorsque le volant est tourné pour ouvrir ou fermer le robinet. Un tel robinet est représenté schématiquement sur les figures 2A et 2B, la figure 2A montrant la position ouverte et la figure 2B la position fermée du robinet. Le dispositif d'indication 30 comportant la jupe 32 et la pièce de support annulaire 34 est le même comme dans le mode d'exécution des figures 1, 3A, 3B, 3C, 4A, 4B et 5A, 5B et n'a pas besoin d'être décrit ici en détail.

Pendant la durée de vie du robinet la jupe 32 peut éventuellement se bloquer sur la pièce de support interne 34. Dans ce cas, le robinet peut être ouvert ou fermé par l'application d'une force de rotation plus élevée au volant 14 causant la rupture des amorces de rupture 50 de la pièce de support annulaire 34. Si la pièce de support 34 est fabriquée d'une matière tenace empêchant la rupture des amorces de rupture 50 la force plus élevée appliquée au volant 14 peut causer une rotation de la pièce de support 34 autour du corps de robinet 12 et autour de l'extrémité polygonale de l'étoupe 34 par déformation de l'ouverture polygonale 46 de la pièce de support annulaire 34. Bien entendu cette force doit aussi surmonter la force de retenue du montage à friction de l'élément de support annulaire 34 sur le corps du robinet 12. Le montage à friction est donc un engagement pressé relativement faible qui est suffisant pour retenir la pièce de support annulaire 34 contre rotation en fonctionnement normal en combinaison avec l'engagement de l'ouverture polygonale 46 sur l'extrémité polygonale de l'étoupe 24.

Il est entendu qu'au lieu des parties filetées 36 et 38 des éléments externe et interne 32 et 34 il est aussi possible de prévoir n'importe quel autre moyen causant un mouvement vertical ou axial de l'élément externe 32 par rapport à l'élément interne 34 lorsque l'élément externe 32 est tourné autour de l'axe A du robinet 10. Par exemple, au lieu des parties filetées 36 et 38 la partie externe 32 pourrait avoir des goujons (non-représentés) espacés circonférentiellement, et s'étendant vers l'intérieur de la surface cylindrique interne de la jupe 32 et reçus dans des rainures hélicoïdales (non-représentées) de l'élément interne 34. Les goujons peuvent aussi être prévus sur la pièce de support interne 34 et s'engager dans des rainures hélicoïdales de la jupe 32.

Ensuite, l'élément interne ou la pièce de support 34 peut être supprimé et la jupe mobile 32 peut être montée directement sur le corps de robinet 12 et couplée à celui-ci par n'importe quel moyen, par exemple un engagement fileté, pour causer un déplacement vertical ou axial de la jupe 32 lorsqu'elle est tournée au moyen du volant 14 autour de l'axe A du robinet 10. Dans ce cas une partie du corps de robinet 10 à découvrir ou à cacher par la jupe 32 sert de moyen ou de surface de signalisation ou d'indication de la position du robinet 10. Cette partie du corps du robinet 12 peut être colorée, par exemple en couleur rouge, ou peut avoir une autre finition de surface, par exemple un aspect brillant, pour la distinguer des surfaces avoisinantes du corps du robinet 12 et de la jupe 32, ou pourrait être formée par une bande colorée, ou autre moyen, appliquée à la surface externe du corps du robinet 12.

En outre, par une conception appropriée du moyen causant l'élément externe 32 de se déplacer verticalement lorsqu'il est tourné au moyen du volant 14, par exemple par une conception appropriée des parties filetées 36 et 38, c'est-à-dire un filetage à droite ou un filetage à gauche, le dispositif d'indication de la position du robinet 10 peut être formé pour cacher la partie d'indication du corps de robinet 12 ou de l'élément 34 en position fermée du robinet et pour l'exposer en position ouverte du robinet, comme décrit ci-avant, ou bien contrairement, c'est-à-dire pour la cacher en position ouverte et l'exposer en position fermée.

De la description précédente, l'on comprendra que le mécanisme selon l'invention permet de voir la condition ouverte ou fermée du robinet 10 à l'extérieur de celui-ci même si la tige 16 et le volant 14 ne se déplacent pas verticalement ou axialement le long de l'axe A pour l'ouverture ou la fermeture du robinet 10. Le même fonctionnement est aussi assuré pour un robinet où la tige elle-même est vissée dans l'étoude ou le corps du robinet et porte la bague d'étanchéité à venir contacter le siège de robinet (figures 2A et 2B). Si dans un tel type de robinet le pas du filetage entre la tige et l'étoupe ou le corps du robinet est faible pour obtenir un faible mouvement d'ouverture, une surface de signalisation ou partie d'indication à hauteur substantielle peut néanmoins être exposée par la sélection d'un angle d'hélice plus élevé pour les parties filetées de l'élément externe 32 et de l'élément interne 34 ou du corps du robinet 12.

Finalement, la partie ou surface de signalisation 34a de l'élément interne 34 n'a pas besoin de s'étendre jusqu'à l'extrémité inférieure de l'élément 34, mais l'élément interne 34 peut être pourvu à son extrémité inférieure d'une petite butée circonférentielle externe (non-représentée) sur laquelle la partie externe 32 vient se poser en position fermée ou ouverte du robinet, en vue de cacher la partie ou surface de signalisation 34a se trouvant au-dessus de cette butée circonférentielle. Aussi, l'élément externe 32 peut avoir une ou plusieurs fenêtres (non-représentées) écartées circonférentiellement et/ou axialement l'une de l'autre et pouvant être alignées avec une ou plusieurs surfaces de signalisation (non-représentées) arrangées de façon correspondante sur l'élément interne 34 ou le corps de robinet 12.

Un ressort (non-représenté) peut être prévu entre le volant 14 et la pièce de support 34 pour éliminer le jeu entre ces éléments et pour servir à la bonne tenue en place.

Selon encore un autre mode d'exécution, la jupe peut être rétractée totalement à l'intérieur du volant dans l'une des deux positions (ouverte et fermée) du robinet et sortie en partie vers l'extérieur du volant dans l'autre position du robinet. Dans ce cas, le moyen de signalisation peut être prévu sur la jupe et peut être formé par la partie de la jupe à faire sortir le volant dans l'une des deux positions du robinet.

D'autres modifications peuvent être apportées par l'homme de l'art au mode d'exécution préféré qui a été décrit ci-avant à titre d'exemple non-limitatif, sans pour autant sortir du cadre le l'invention déterminé uniquement par la portée des revendications.

## Revendications

1. Robinet, notamment pour bouteille de gaz ou de gaz liquéfié, comportant un corps de robinet (12) formant partie d'une structure fixe du robinet (10), un volant (14) rotatif par rapport à la structure fixe du robinet (10) et autour d'un axe de rotation (A) pour ouvrir ou fermer le robinet (10), et un moyen (30) pour indiquer la position ouverte ou fermée du robinet (10), ce moyen d'indication comportant une jupe (32) mobile pour cacher ou exposer un moyen de signalisation (34a) afin d'indiquer par la visibilité ou l'invisibilité de ce moyen de signalisation (34a) l'état d'ouverture ou de fermeture du robinet, cette jupe (32) étant couplée, de l'un côté, au volant (14) et couplée, de l'autre côté, à un élément de la structure fixe du robinet (10) en vue de causer, sous l'effet du mouvement de rotation du volant (14) dans l'un ou l'autre sens, un déplacement axial de ladite jupe (32) le long de l'axe de rotation (A) par rapport au volant (14) et à la structure fixe du robinet en vue de cacher ou d'exposer le moyen de signalisation (34a), **caractérisé en ce que** ladite jupe (32) est couplée au volant (14) en vue d'être entraînée en rotation par celui-ci par rapport à la structure fixe du robinet (10), et la jupe (32) étant couplée audit élément de ladite structure fixe du robinet (10) par un moyen causant, sous l'effet du mouvement de rotation de la jupe (32), ledit déplacement axial de la jupe (32).

2. Robinet selon la revendication 1, **caractérisé en ce que** l'élément de la structure fixe du robinet est une pièce de support annulaire (34) dont au moins une partie est entourée par la jupe (32), cette pièce annulaire (34) étant montée en vue d'être normalement retenue en position fixe contre mouvement de rotation et mouvement axial par rapport au corps de robinet (12).

3. Robinet selon la revendication 2, **caractérisé en ce que** le moyen causant un déplacement axial de la jupe (32) sous l'effet de son mouvement de rotation est choisi entre les alternatives suivantes :
a. une partie filetée (36) ayant au moins un pas de vis formée sur la surface interne de la jupe (32) et étant en engagement avec une partie filetée correspondante (38) formée sur la surface externe de la pièce de support annulaire (34),
b. une ou plusieurs rainures hélicoïdales formées dans l'un des éléments comportant la jupe(32) et la pièce de support annulaire (34) et un ou plusieurs goujons engagés dans la ou les rainures et solidarisés de l'autre des éléments comportant la jupe (32) et la pièce de support annulaire (34).

4. Robinet selon la revendication 2 ou 3, **caractérisé en ce que** le moyen de signalisation (34a) est formé par une partie de la pièce de support annulaire (34) qui est cachée par la jupe (32) si le robinet (10) est fermé ou ouvert et qui est rendue visible à l'extérieur du robinet (10) par déplacement axial de la jupe (32) par rapport à la pièce de support annulaire (34) en réponse à la rotation du volant (14) pour ouvrir ou fermer le robinet (10).

5. Robinet selon la revendication 4, **caractérisé en ce qu'**au moins ladite partie de la pièce de support annulaire (34) se distingue de la jupe (32) et d'autres surfaces avoisinantes du robinet (10) par au moins une des conditions suivantes :
a. une finition de surface différente
b. une couleur différente
c. un matériau différent.

6. Robinet selon la revendication 4 ou 5, **caractérisé en ce que** ladite partie de la pièce de support annulaire (34) est une partie annulaire de la pièce de support qui se trouve à, ou à proximité de, l'extrémité de la pièce de support annulaire (34) éloignée du volant (14) du robinet (10).

7. Robinet selon l'une quelconque des revendication 2 à 6, **caractérisé en ce que** la pièce de support annulaire (34) est montée par un engagement pressé sur le corps de robinet (12) en vue d'être normalement retenue immobile par friction sur celui-ci.

8. Robinet selon la revendication 7, **caractérisé en ce que** la pièce de support annulaire (34) comporte sur sa surface interne des nervures (52) s'engageant par friction sur le corps de robinet (12).

9. Robinet selon l'une quelconque des revendications 2 à 8, **caractérisé en ce que** la pièce de support annulaire (34) est pourvue d'une ouverture centrale (46) de forme polygonale engageant une extrémité polygonale d'une bague d'étoupe (24) pour normalement empêcher un mouvement de rotation de la pièce de support annulaire (34) avec la jupe (32) et le volant (14).

10. Robinet selon la revendication 9, **caractérisé en ce que** la forme polygonale de l'ouverture (46) de la pièce de support annulaire (34) est formée pour permettre sa rotation avec la jupe (32) autour de la bague d'étoupe (24) et autour du corps de robinet (12) par l'application d'une force de rotation au volant (14) dépassant la force de retenue de l'engagement pressé de la pièce de support annulaire (34) sur le corps de robinet (12) et causant une déformation de la forme polygonale de l'ouverture (46) de la pièce de support annulaire (34) en vue de permettre sa rotation autour de la forme polygonale de l'extrémité de la bague d'étoupe (24) en cas de blocage de la jupe (32) sur la pièce de support annulaire (34).

11. Robinet selon l'une quelconque des revendications 2 à 10, **caractérisé en ce que** la pièce de support annulaire (34) est pourvue d'une ou plusieurs amorces de rupture (50) en vue de permettre l'ouverture ou la fermeture du robinet (10) par l'application d'une force de rotation au volant (14) causant la rupture des amorces de rupture (50).

12. Robinet selon l'une quelconque des revendications 1 à 11, **caractérisé en ce que** la jupe mobile (32) est reçue par l'une de ces extrémités dans une cavité du volant (14), la jupe mobile (32) étant pourvue à cet extrémité d'un rebord (40) à plusieurs parties saillantes (42) écartées l'une de l'autre en direction circonférentielle du rebord (40), ces parties saillantes (42) étant reçues dans des creux de forme correspondante pratiqués dans la surface interne de la cavité du volant (14) en vue de coupler la jupe mobile (32) au volant (14) pour rotation avec celui-ci, l'autre extrémité de la jupe (32) étant située à l'extérieur de la cavité du volant (14) au moins dans sa position cachant le moyen de signalisation (34a).

13. Robinet selon l'une quelconque des revendications 1 à 12, **caractérisé en ce que** la jupe (32) cache ledit moyen de signalisation (34a) dans la position fermée du robinet (10) et est décalée axialement de celui-ci en vue de l'exposer dans la position ouverte du robinet (10).

14. Robinet selon la revendication 2, **caractérisé en ce que** la jupe (32) et la pièce de support annulaire sont fabriquées en matière plastique.

15. Robinet selon la revendication 1, **caractérisé en ce que** l'élément de la structure fixe du robinet (10) est le corps de robinet,
**en ce que** le moyen causant un déplacement axial de la jupe (32) sous l'effet de son mouvement de rotation est choisi entre les alternatives suivantes :
a. une partie filetée (36) ayant au moins un pas de vis formée sur la surface interne de la jupe (32) et étant en engagement avec une partie filetée correspondante formée sur la surface externe du corps de robinet (12), et
b. une ou plusieurs rainures hélicoïdales formées dans l'un des éléments comportant la jupe (32) et le corps de robinet (12) et un ou plusieurs goujons engagés dans la ou les rainures et solidarisés de l'autre des éléments comportant la jupe (32) et le corps de robinet (12), et
**en ce que** le moyen de signalisation se trouve sur le corps de robinet (12) ou sur la jupe (32).

16. Robinet selon la revendication 15, **caractérisé en ce que** le moyen de signalisation se distingue de la jupe (32) et d'autres surfaces avoisinantes du robinet (10) par au moins une des conditions suivantes :
a. une finition de surface différente
b. une couleur différente
c. un matériau différent

17. Robinet selon la revendication 15 ou 16, **caractérisé en ce que** la jupe (32) est fabriquée en matière plastique.

## Claims

1. Tap, especially for a gas or liquefied gas cylinder, comprising a tap body (12) forming part of a fixed structure of the tap (10), an actuating wheel (14) rotatable with respect to the fixed structure of the tap (10) and about an axis of rotation (A) to open or close the tap (10), and a means (30) for indicating the open or closed position of the tap (10), said indicating means comprising a movable skirt (32) for covering or exposing a signaling means (34a) to indicate by the visibility or invisibility of said signaling means (34a) the open or closed condition of the tap, said skirt (32) being coupled, at the one side, to the actuating wheel (14) and coupled, on the other side, to an element of the fixed structure of the tap (10) so as to cause, under the effect of the rotational movement of the wheel (14) in one or the other direction, an axial displacement of the skirt along the axis of rotation (A) with respect to the wheel (14) and with respect to the fixed structure of the tap to cover or expose the signaling means (34a), **characterized in that** said skirt (32) is coupled to the wheel (14) so as to be driven in rotation by said wheel (14) with respect to the fixed structure of the tap (10), and the skirt (32) being coupled to said element of the fixed structure of the tap (10) by a means causing, under the effect of the rotational movement of the skirt (32), said axial displacement of the skirt (32).

2. Tap according to claim 1, **characterized in that** the element of said fixed structure of the tap is an annular support member (34) at least a portion thereof being surrounded by said skirt (32), said annular member (34) being mounted so as to be normally retained in fixed position against rotational movement and axial movement with respect to the tap body (12).

3. Tap according to claim 2, **characterized in that** the means causing an axial displacement of the skirt (32) under the effect of its rotational movement is selected among the following alternatives:
a. a threaded portion (36) having at least one screw thread formed on the internal surface of the skirt (32) and being in engagement with a corresponding threaded portion (38) formed on the external surface of the annular support member (34),
b. one or a plurality of helical grooves formed in one of the elements comprising the skirt (32) and the annular support member (34) and one or a plurality of pins engaged in said groove or grooves and fixed on the other of the elements comprising the skirt (32) and the annular support member (34).

4. Tap according to claim 2 or 3, **characterized in that** the signaling means (34a) is formed by a portion of the annular support member (34), which is covered by the skirt (32) when the tap (10) is closed or open and which is made visible on the exterior of the tap (10) by axial displacement of the skirt (32) with respect to the annular support member (34) in response to rotational movement of the wheel (14) for opening or closing the tap (10).

5. Tap according to claim 4, **characterized in that** at least said portion of the annular support member (34) is distinguished from the skirt (32) and other adjacent surfaces of the tap (10) by at least one of the flowing conditions:
a. a different surface finish
b. a different colour
c. a different material

6. Tap according to claim 4 or 5, **characterized in that** said portion of the annular support member (34) is an annular portion of the support member provided at, or in proximity of, the extremity of the annular support member (34) spaced from the wheel (14) of the tap (10).

7. Tap according to any one of claims 2 to 6, **characterized in that** the annular support member (34) is mounted by a press-fitted engagement on the tap body (12) so as to be normally retained against rotation by frictional engagement with the tap body.

8. Tap according to claim 7, **characterized in that** the annular support member (34) comprises ribs (52) on its internal surface for frictionally engaging the tap body (12).

9. Tap according to any one of claims 2 to 8, **characterized in that** the annular support member (34) is provided with a central opening (46) of polygonal shape engaging a polygonal end portion of a gland ring (24) to normally prevent rotational movement of the annular support member (34) with the skirt (32) and the wheel (14).

10. Tap according to claim 9, **characterized in that** the polygonal shape of the opening (46) of the annular support member (34) is formed to permit rotation thereof with the skirt (32) about the gland ring (24) and about the tap body (12) by exertion of a sufficient rotational force on the wheel (14) exceeding the retention force of the press-fitted engagement of the annular support member (34) on the tap body (12) and causing deformation of the polygonal shape of the opening (46) of the annular support member (34) to permit rotation thereof about the polygonal shape of the end of the gland ring (24) in case the skirt (32) becomes stuck on the annular support member (34).

11. Tap according to any one of claims 2 to 10, **characterized in that** the annular support member (34) is provided with one or a plurality of predetermined rupture areas (50) so as to permit opening or closing of the tap (10) by exerting a sufficient rotational force on the wheel (14) causing breakage of the predetermined rupture areas.

12. Tap according to any one of claims 1 to 11, **characterized in that** the movable skirt (32) is received with one of its ends in a cavity of the wheel (14), the movable skirt (32) being provided to this effect with a flange (40) having a plurality of radial projections (42) spaced one from the other in circumferential direction of the flange (40), said projections (42) being received in recesses of corresponding shape formed in the internal surface of the wheel (14) so as to couple the movable skirt (32) to the wheel (14) for rotation therewith, the other end of the skirt (32) being located at the exterior of the cavity of the wheel (14) at least in its position covering the signaling means (34a).

13. Tap according to any one of claims 1 to 12, **characterized in that** the skirt (32) masks the signaling means (34a) in the closed position of the tap (10) and is axially spaced therefrom to expose it in the open position of the tap (10).

14. Tap according to claim 2, **characterized in that** the skirt (32) and the annular support member are fabricated from plastic material.

15. Tap according to claim 1, **characterized in that** the element of the fixed structure of the tap (10) is the tap body,
that the means causing an axial displacement of the skirt (32) under the effect of its movement of rotation is selected among the following alternatives:
a. a threaded portion (36) having at least one screw thread formed on the internal surface of the skirt (32) and being in engagement with a corresponding threaded portion formed on the external surface of the tap body (12), and
b. one or a plurality of helical grooves formed in one of the elements comprising the skirt (32) and the tap body (12) and one or a plurality of pins engaged in said groove or grooves and fixed on the other of the elements comprising the skirt (32) and the tap body (12), and
that the signaling means is provided on the tap body (12) or on the skirt (32).

16. Tap according to claim 15, **characterized in that** the signaling means is distinguished from the skirt (32) and from other adjacent surfaces of the tap (10) by at least one of the following conditions:
a. a different surface finish
b. a different colour
c. a different material.

17. Tap according to claim 15 or 16, **characterized in that** the skirt (32) is made from plastic material.

## Patentansprüche

1. Ventil, insbesondere für Gas- oder Flüssiggasflasche, mit einem Ventilkörper (12), der Teil einer festen Struktur des Ventils (10) ist, einem Drehrad (14), das drehbar ist in Bezug auf die feste Struktur des Ventils (10) und um eine Drehachse (A) zum Öffnen oder Schliessen des Ventils (10), und einem Mittel (30) zum Anzeigen der Offenstellung oder Schliessstellung des Ventils (10), wobei dieses Anzeigemittel eine bewegliche Schürze (32) aufweist zum Verdecken oder Freilegen eines Signalisiermittels, um durch die Sichtbarkeit oder Unsichtbarkeit dieses Signalisiermittels (34a) den Öffnungs- oder Schliesszustand des Ventils anzuzeigen, wobei die Schürze (32) einerseits mit dem Drehrad (14) und andererseits mit einem Element der festen Struktur des Ventils (10) gekoppelt ist, um infolge der Rotationsbewegung des Drehrades (14) in der einen oder anderen Richtung eine Axialbewegung der Schürze (32) längs der Drehachse (A) in Bezug auf das Drehrad (14) und in Bezug auf die feste Struktur des Ventils zu bewirken, um das Signalisiermittel (34a) zu verdecken oder freizulegen, **dadurch gekennzeichnet, dass** die Schürze (32) mit dem Drehrad (14) gekoppelt ist, damit die Schürze (32) durch das Drehrad in Bezug auf die feste Struktur des Ventils (10) in Drehrichtung anzutreiben ist, und dass die Schürze (32) mit dem Element der festen Struktur über ein Mittel gekoppelt ist, das infolge der Rotationsbewegung der Schürze (32) die Axialbewegung der Schürze (32) veranlasst.

2. Ventil nach Anspruch 1, **dadurch gekennzeichnet, dass** das Element der festen Struktur des Ventils ein ringförmiges Tragelement (34) ist, das mindestens zum Teil von der Schürze (32) umgeben ist, wobei das ringförmige Element (34) montiert ist damit es normalerweise in einer festen Stellung gegen Rotationsbewegung und Axialbewegung in Bezug auf den Ventilkörper (12) zurückgehalten ist.

3. Ventil nach Anspruch 2, **dadurch gekennzeichnet, dass** das Mittel, das eine Axialbewegung der Schürze (32) infolge ihrer Rotationsbewegung veranlasst ausgewählt ist zwischen folgenden Alternativen:
a. ein Gewindeteil (36) mit mindestens einem Gewindegang auf der Innenfläche der Schürze (32), der in Eingriff ist mit einem entsprechenden Gewindeteil (38), auf der Aussenfläche des ringförmigen Tragelementes (34),
b. eine oder mehrere schraubenförmige Nuten, welche in einem der die Schürze (32) und das ringförmige Tragelement (34) umfassenden Bauteile geformt sind, und einen oder mehrere Stifte, der bzw. die in die Nut oder die Nuten eingreifen, die an dem anderen der die Schürze (32) und das ringförmige Tragelement (34) umfassenden Bauteile befestigt sind.

4. Ventil nach Anspruch 2 oder 3, **dadurch gekennzeichnet, dass** das Signalisiermittel (34a) durch einen Teil des ringförmigen Tragelementes (34) gebildet ist, der von der Schürze (32) verdeckt ist wenn das Ventil (10) geschlossen oder offen ist, und der aussen an dem Ventil (10) durch Axialbewegung der Schürze (32) in Bezug auf das ringförmige Tragelement (34) bei Rotationsbewegung des Drehrades (14) zum Öffnen oder Schliessen des Ventils (10) sichtbar zu machen ist.

5. Ventil nach Anspruch 4, **dadurch gekennzeichnet, dass** mindestens der eine Teil des ringförmigen Tragelementes (34) sich von der Schürze (32) und anderen, angrenzenden Flächen des Ventils (10) durch mindestens eines der folgenden Merkmale unterscheidet:
a. eine andere Oberflächenbeschaffenheit
b. eine andere Farbe
c. ein anderer Werkstoff

6. Ventil nach Anspruch 4 oder 5, **dadurch gekennzeichnet, dass** der eine Teil des ringförmigen Tragelementes (34) ein ringförmiger Teil des Tragelementes ist, der sich am Ende oder in der Nähe des Endes des ringförmigen Tragelementes (34) befindet, das von dem Drehrad (14) des Ventils (10) abgewandt ist.

7. Ventil nach einem der Ansprüche 2 bis 6, **dadurch gekennzeichnet, dass** das ringförmige Tragelement (34) durch einen Presssitz auf den Ventilkörper (12) aufgesetzt ist, um normalerweise durch Reibung unbeweglich auf dem Ventilkörper zurückgehalten zu werden.

8. Ventil nach Anspruch 7, **dadurch gekennzeichnet, dass** das ringförmige Tragelement (34) Rippen (52) auf seiner inneren Fläche besitzt zur reibschlüssigen Anlage an dem Ventilkörper (12).

9. Ventil nach einem der Ansprüche 2 bis 6, **dadurch gekennzeichnet, dass** das ringförmige Tragelement (34) mit einer vieleckigen, mittleren Öffnung (46) versehen ist, die in Eingriff ist mit einem vieleckigen Ende einer Stopfbüchse (24), um normalerweise eine Rotationsbewegung des ringförmigen Tragelementes (34) mit dem Schürze (32) und dem Drehrad (14) zu verhindern.

10. Ventil nach Anspruch 9, **dadurch gekennzeichnet, dass** die vieleckige Form der Öffnung (46) des ringförmigen Tragelementes (34) geformt ist, um seine Drehbewegung mit dem Schürze (32) um die Stopfbüchse (24) und um dem Ventilkörper (12) zu erlauben, durch Ausüben einer Rotationskraft auf das Drehrad (14), welche die Zurückhaltekraft des Presssitzes des ringförmigen Tragelementes (34) auf den Ventilkörper (12) überwindet und die vieleckige Form der Öffnung (46) des ringförmigen Tragelementes (34) verformt, um seine Rotationsbewegung um die vieleckige Form des Endes der Stopfbüchse (34) im Falle einer Blockierung der Schürze (32) auf dem ringförmigen Tragelement (34) zu erlauben.

11. Ventil nach einem der Ansprüche 2 bis 10, **dadurch gekennzeichnet, dass** das ringförmige Tragelement (34) mit einer oder mehreren Sollbruchstellen (50) versehen ist, um das Öffnen oder das Schliessen des Ventils (10) zu erlauben durch Ausüben einer Rotationskraft auf das Drehrad (14), welche den Bruch der Sollbruchstellen (50) bewirkt.

12. Ventil nach einem der Ansprüche 1 bis 11, **dadurch gekennzeichnet, dass** die bewegliche Schürze (32) mit einem ihrer Enden in einem Hohlraum des Drehrades (14) aufgenommen ist, und die bewegliche Schürze an diesem Ende einen Flansch (40) besitzt, der mehrere Vorsprünge (42) aufweist, welche in Umfangsrichtung des Flansches (40) in Abstand voneinander angeordnet sind, wobei diese Vorsprünge (42) in Ausnehmungen entsprechender Form aufgenommen sind, die in der Innenfläche des Hohlraumes des Drehrades (14) vorgesehen sind, um die bewegliche Schürze (32) mit dem Drehrad (14) zur Rotation mit demselben zu koppeln, und wobei das andere Ende der Schürze (32) sich ausserhalb des Hohlraumes des Drehrades (14) befindet, mindestens in ihrer Stellung in welcher sie das Signalisiermittel (34a) verdeckt.

13. Ventil nach einem der Ansprüche 1 bis 12, **dadurch gekennzeichnet, dass** die Schürze (32) das Signalisiermittel (34a) in der Schliessstellung des Ventils (10) verdeckt und in der Offenstellung des Ventils (10) axial davon beabstandet ist, um es freizulegen.

14. Ventil nach Anspruch 2, **dadurch gekennzeichnet, dass** die Schürze (32) und das ringförmige Tragelement aus Kunststoff hergestellt sind.

15. Ventil nach Anspruch 1, **dadurch gekennzeichnet, dass** das Element der festen Struktur des Ventils (10) der Ventilkörper ist,
dass das Mittel, das eine Axialbewegung der Schürze (32) infolge ihrer Rotationsbewegung veranlasst ausgewählt ist zwischen folgenden Alternativen:
a. ein Gewindeteil (36) mit mindestens einem Gewindegang auf der Innenfläche der Schürze (32), der in Eingriff ist mit einem entsprechendem Gewindeteil auf der Aussenfläche des Ventilkörpers (12), und
b. eine oder mehrere schraubenförmige Nuten in einem der die Schürze (32) und den Ventilkörper (12) umfassenden Bauteile und einen oder mehrere Stifte, der bzw. die in die Nut oder Nuten eingreifen und an dem anderen der die Schürze (32) und den Ventilkörper (12) umfassenden Bauteile befestigt sind, und
c. dass das Signalisiermittel sich auf dem Ventilkörper (12) oder auf der Schürze (32) befindet.

16. Ventil nach Anspruch 15, **dadurch gekennzeichnet, dass** das Signalisiermittel sich von der Schürze (32) und anderen, angrenzenden Flächen des Ventils (10) durch mindestens eines der folgenden Merkmale unterscheidet:
a. eine andere Oberflächenbeschaffenheit
b. eine andere Farbe
c. einen anderen Werkstoff.

17. Ventil nach Anspruch 15 oder 16, **dadurch gekennzeichnet, dass** die Schürze (32) aus Kunststoff hergestellt ist.
